# EUROPÄISCHE PATENTANMELDUNG

(11) **EP 4 349 449 A1**
(43) Veröffentlichungstag der Anmeldung: **10.04.2024**
(21) Anmeldenummer: 23201972.9
(22) Anmeldetag: 05.10.2023
(51) Int. Cl.: B01D 46/00, B01D 45/08, B01D 39/18, B05B 14/43

(54) **FILTER MIT VERBESSERTER FILTERKULISSE**

(30) Priorität: 05.10.2022 DE 102022125704
(71) Anmelder: Jablonski, Michael, 45481 Mülheim a. d. Ruhr (DE)
(72) Erfinder: Jablonski, Michael, 45481 Mülheim a. d. Ruhr (DE)
(74) Vertreter: Schulte & Schulte

(57) **Zusammenfassung**

Ein Filtermodul dient zum Abscheiden insbesondere von klebrigen und trockenem Lack und/oder Kleberoverspray, Schleifstäuben etc. Es umfasst ein Filtergehäuse 1, in dem Lamellen 20-26 zwischen einer Bodenplatte 2 und einer Deckelplatte 3 unter Vorgabe einer Filterkulisse geführt sind. Letztere weist Aufnahmen 10-16 für eine Mehrzahl von in Reihen 5, 6, 7 angeordneten Lamellen 20-26 auf.

## Beschreibung

Die Erfindung betrifft ein Filtermodul zum Abscheiden insbesondere von klebrigem und trockenem Lack- und/oder Kleberoverspray, Schleifstäuben etc., mit einem Filtergehäuse, in dem Lamellen zwischen einer Bodenplatte und einer Deckelplatte unter Vorgabe einer Filterkulisse geführt sind.

Solche Abscheidefilter sind hinlänglich bekannt, etwa aus der PCT/DE2022/100235. Sie umfassen ein in einem als Filtergehäuse ausgebildeten Umkarton positioniertes Filtermodul mit hintereinander angeordneten, plattenartigen Einlegern. Um der Beaufschlagung solcher Filter mit klebrigem und anderweitig problematischen Substanzen Herr zu werden, ist es zu einer Realisation einer effektiven Filterkulisse sehr hilfreich, Abstandshalter zwischen den das Filtermodul ausmachenden Einlegerabschnitten vorzusehen.

Ausgehend von diesem Stand der Technik stellt sich der vorliegenden Erfindung die Aufgabe, diesem Filtermodul mit vergleichmäßigter Beaufschlagung mit Farbnebel zu einer noch höheren Standzeit zu verhelfen.

Diese Aufgabe wird dadurch gelöst, dass die Filterkulisse Aufnahmen für eine Mehrzahl von in Reihen angeordneten Lamellen aufweist, wodurch ein besonders kompakter Filter geschaffen ist. Ermöglicht ist dies dank der Anordnung der Aufnahmen in mehreren parallelen Reihen. Die Formulierung "Reihe" impliziert dabei selbstredend, dass mindestens zwei Aufnahmen/Lamellen nebeneinander positioniert sind. Ein Kragen ergänzt die vorteilhaft kompakte Ausbildung des erfindungsgemäßen Filtermoduls. Erreicht wird diese Kompaktheit insbesondere dadurch, dass die Deckelplatte und/oder die Bodenplatte mit einem verschwenkbaren Kragen ausgerüstet ist. Dieser kann umgeschlagen und damit fixiert werden, um zusätzlich dem Filtermodul noch mehr Stabilität zu verleihen.

Eine Verbindung von Deckel- und Bodenplatte dient dazu, dass durch diese ein fest definierter Abstand zwischen Deckel- und Bodenplatte entsteht. Durch das Umbiegen/Einknicken der beiden Kragen kann eine Lamelle bis zu sieben Mal schneller und einfacher eingesteckt werden. Durch die beiden Kragen können die Lamellen erst eine Fixierung erlangen. Ohne Verbindung/Wände muss man die Lamellen nacheinander in die zweite Platte einstecken, was fertigungstechnisch natürlich unnötige Zeit benötigt.

Die nachfolgend beschriebenen Anordnungen der Aufnahmen, respektive Lamellen in Reihe, beziehen sich auf die Strömungsrichtung. Dies gilt etwa für den Vorschlag, wonach die vordere Reihe und/oder die hintere Reihe jeweils Aufnahmen für mindestens zwei Lamellen umfassen. Dabei ist angesichts der Formulierung für Reihen davon auszugehen, dass mindestens zwei Lamellen so positioniert sind, direkt oder indirekt nebeneinander. Das o.g. Filtermodul kann damit als vorgeschalteter Vorabscheider, sprich als Opferfilter fungieren, um die größten Farbpartikel aus dem Sprühnebel vorabzuscheiden.

Denkbar ist in diesem Zusammenhang die Anordnung der Aufnahmen parallel oder ggf. auch verdreht zueinander. So sieht erst genannte Variante vor, dass die die Endpunkte der Aufnahmen für die Lamellen in der vorderen Reihe und/oder hinteren Reihe gedanklich verbindenden Geraden in einer Flucht angeordnet sind. Die beschriebene Gerade ist also dieselbe bzw. deren Fortsetzung für die nebeneinander angeordneten Aufnahmen, was einer bevorzugten Variante der Erfindung entspricht und eben insbesondere für die Anordnung in der vorderen bzw. der hinteren Reihe maßgeblich ist.

Alternativ dazu gibt es Ausführungsformen, bei denen die die Endpunkte der Aufnahmen für die Lamellen in der vorderen und/oder hinteren Reihe gedanklich mit verbundenen Geraden in einem Winkel von 5° bis 15°, vorzugsweise 10° zur Längsachse des Filtergehäuses angeordnet sind. In diesem Fall ist insbesondere an die in der mittleren Reihe außen positionierten Aufnahmen gedacht. Verbindet man deren Endpunkte über eine Gerade, liegt diese eben in der Ausführungsform der Erfindung nicht in einer Flucht mit der benachbarten, sondern die Geraden schneiden sich jenseits der Aufnahmen.

Die Orientierung der Lamellen in der Deckel- oder Bodenplatte sowie in Bezug zueinander lässt sich am besten so beschreiben, dass die die Endpunkte der Aufnahmen für die Lamellen in der mittleren Reihe gedanklich verbindenden Geraden in einem Winkel von 5° bis 15°, vorzugsweise 10° zur Längsachse des Filtergehäuses angeordnet sind. Die Aufnahmen bzw. die Lamellen sind also nur in einem überschaubaren Maße um die angegebenen Gradzahlen gewissermaßen verdreht angeordnet.

In Strömungsrichtung betrachtet, erweist es sich als vorteilhaft, wenn die Lamellen in der vorderen Reihe nach außen gewölbt angeordnet sind, sodass der Sprühnebel quasi zuerst und von hinten/außen auf diese beiden Lamellen trifft, zwischen denen ein Freiraum für eine in der Reihe dahinter positionierte dritte Lamelle verbleibt. Außen finden sich weitere Lamellen in der mittleren Reihe. Dabei ist die zentrale Lamelle aber eben im Vergleich zu den beiden übrigen Lamellen der mittleren Reihe um ca. 15° verdreht positioniert.

Insgesamt ergibt sich damit ein Bild, bei dem die Lamellen der vorderen Reihe nach außen gewölbt angeordnet sind. Dies gilt nicht für die Lamellen in der mittleren und hinteren Reihe, weil die Lamellen zur Optimierung der Kulissenführung in der mittleren und hinteren Reihe nach innen gewölbt angeordnet sind.

Wenn die Aufnahmen für die Lamellen in der hinteren Reihe gegenüber den Aufnahmen für die Lamellen in der vorderen Reihe um ca. 180° versetzt zueinander angeordnet sind, ist eine besonders vorteilhafte Kulisse verwirklicht, die in effektiver Weise eine Kulisse für den Sprühnebel und dessen Abscheidung realisiert. Das bevorzugte Szenario wäre demnach die Orientierung der beiden Lamellen in der vorderen Reihe nach außen gewölbt. Daran schließt sich die mittlere Reihe mit nach innen gewölbten, leicht verdrehten Lamellen an. Schließlich folgt die hintere Reihe mit in Bezug auf die erste Reihe um 180° versetzten, zweckmäßigerweise zwei Lamellen.

Eine weitere Ausführungsform der Erfindung bezieht sich darauf, dass die beiden Aufnahmen in der vorderen Reihe, sowohl in der Bodenplatte als auch in der Deckelplatte im tiefsten Punkt der Krümmung zur Gehäusevorderseite annährend bündig zum vorderen Rand von Bodenplatte und/oder Deckelplatte angeordnet sind.

Wenn die Aufnahmen der hinteren Reihe einen Abstand aufweisen, der eine Ausbildung eines Entspannungsraumes, welcher durch die diversen Platten gebildet und begrenzt ist, begünstigt, ist eine weitere vorteilhafte Lösung offenbart. Sofern die Aufnahmen der hinteren Reihe einen die Ausbildung eines Entspannungsraums begünstigenden Abstand von mindestens 2 cm bis 4 cm, vorzugsweise 3 cm zum hinteren Rand von Bodenplatte oder Deckelplatte aufweisen, ist die optimale Geometrie für solch einen Entspannungsraum geschaffen. Dies gilt erst recht, wenn der Entspannungsraum/Wechselzelle zwischen der Rückseite des Filtergehäuses und dem direkt dahinter auf Stoß angeordneten zweiten Farbnebelabscheidemoduls vorgesehen ist. Auf diese Weise kann zwischen der Rückseite des Filtergehäuses und dem Stoß angeordneten zweiten Farbnebelabscheidemodul ein noch höherer Abscheidegrad erwirkt werden.

Wenn nun noch die Aufnahmen der hinteren Reihe einen Mindestabstand zum hinteren Rand von Deckelplatte oder Bodenplatte aufweisen, ist das hilfreich, um den Entspannungsraum in der von diesem durchströmten Richtung die notwendige Tiefe zu verleihen und zwar zwischen der Rückseite des Filtergehäuses und dem direkt dahinter auf Stoß angeordneten zweiten Farbnebelabscheidemodul mit einem massiv höheren Abscheidegrad gegenüber dem Stand der Technik. Indem die Aufnahmen der hinteren Reihe einen Abstand von mindestens 2-4 cm, vorzugsweise von 3 cm zum hinteren Rand von Bodenplatte oder Deckelplatte aufweisen, ist dieser Abstand realisiert.

Nach einem weiteren Vorschlag ist daran gedacht, dass zwischen der Rückseite des Filtergehäuses und dem direkt dahinter auf Stoß angeordneten zweiten Farbnebelabscheidemoduls ein Entspannungsraum vorgesehen ist, welcher durch die diversen Platten gebildet und begrenzt ist.

Eine weitere vorteilhafte Ausführungsform der Erfindung sieht vor, dass die Aufnahmen der hinteren Reihe den Abstand von mindestens 3 cm zum hinteren Rand von Bodenplatte oder Deckelplatte aufweisen, um den auch als Wechselzelle zu bezeichnenden Entspannungsraum zu bilden bzw. zu begrenzen.

Wenn als hinterer Abschluss des Entspannungsraumes eine eine Filterfunktion ausübende Abschlussplatte dient, werden die genannten Maßnahmen zusätzlich unterstützt. Dabei kann es sich auch um eine die Filterfunktion des übrigen Moduls unterstützende oder ggf. ersetzende Platte handeln. Die Platte, genauer gesagt, deren Stege können mit einem Papiergelege verbunden sein, etwa durch Tackern.

Ergänzend ist vorgesehen, dass eine seitliche Abschlussplatte mindestens einen zur Verankerung der Platte dienenden und korrespondierend zu den Aufnahmen in der Bodenplatte bzw. Deckenplatte dienenden Zapfen aufweist. Mit Einsetzen der Platte zwischen Decken- und Bodenplatte fixieren sich die vorzugsweise zwei nebeneinander angeordneten Zapfen selbsttätig.

Wenn der Abstand der am Rand, also zu den Seitenwänden angeordneten Lamellen der mittleren Reihe zur Gehäusewand maximal der Dicke der Lamellen bzw. der halben Schalendicke entspricht, ist eine weitere vorteilhafte Lösung geschaffen. Wäre dort eine Lücke, sprich der Abstand der Aufnahmen zum Rand zu groß, könnte Farbnebel ungehindert durch das Modul ohne Umlenkung durchströmen.

Die Boden- und die Deckelplatte wurden ja bereits kurz vorgestellt. Sie sind samt seitlichen Wandungen in das Filtergehäuse integriert. Daher ist vorgesehen, dass die Länge der Lamellen zumindest weitgehend dem lichten Abstand zwischen Deckelplatte und Bodenplatte entspricht, was dem Gedanken der Kompaktheit zu Gute kommt.

Ergänzt wird diese Kompaktheit dadurch, dass die Deckelplatte und/oder die Bodenplatte mit einem verschwenkbaren, zum Festklemmen von Deckelplatte und/oder Bodenplatte in dem Filtergehäuse dienenden Kragen ausgerüstet ist, der zusätzlich umgeschlagen werden kann, um dem Filtergehäuse noch mehr Stabilität zu verleihen.

Eine weitere vorteilhafte Ausbildungsform der Erfindung sieht vor, dass die Lamellen mehrere in Richtung ihrer Längsachse verlaufende Abschnitte aufweisen, um quasi aus einer Platte eine Halbschale zu formen. Die Aufnahmen und damit die Lamellen sind als Halbschalen ausgebildet und bestehen dabei vorzugsweise aus vorgefertigtem Karton mit Perforationen, Kerben, Rillen oder ähnlichen vorbereiteten Maßnahmen beim Einsetzen der Halbschalen in die Aufnahmen, wozu lediglich eine gewisse Kraft zum Falten der Lamelle notwendig ist.

Dass die Lamellen an ihren Flanken ein das Verkeilen begünstigendes Profil aufweisen, erweist sich als gerade in Bezug auf die gewählten Halbschalen geeigneter Schritt, z.B. bei Einsatz eines Vlieses.

In diesem Sinne wird vorgeschlagen, dass Lamellen zumindest abschnittsweise von einem Vlies als Filtermedium umgeben sind. Was den Aufbau dieses Vlieses betrifft, ist es zweckmäßig, wenn das Vlies aus mindestens einer Schicht gebildet ist und dadurch die Plattendicke der Lamelle nicht auf deren Erstreckung in der dritten Raumrichtung auf die Plattendicke beschränkt ist bzw. über eben diese Plattendicke durch das Vlies hinausgeht, bzw. wenn in dem Vlies Ausnehmungen vorgesehen sind, deren Tiefe sich bis zur jeweils anderen Schicht erstreckt.

Die Installation eines einschlägigen Filtermoduls kann maßgeblich vereinfacht werden, wenn die Frontplatten des Filtergehäuses unter Belassen eines nach innen gerichteten Rahmens demontierbar ausgebildet sind. Dazu ist quasi eine Frontplatte aus deren Ebene nach unten aus dem Filtergehäuse herausklappbar ausgebildet, sodass ein Rahmen verbleibt, dessen unterer Abschnitt u.a. deswegen als vorteilhaft anzusehen ist, weil sich hier eine kleine Wanne ausbildet, in der Sprühnebel u.ä. aufgefangen werden kann.

Um diese Maßnahme noch zu vereinfachen, sieht die Erfindung vor, dass zwischen der Frontplatte des Filtergehäuses und dem Rahmen eine Perforation vorgesehen ist, sodass für jedermann schnell und einfach verständlich ist, was hier wohin geklappt werden muss, indem die Perforation dies eben vorgibt.

Es erweist sich auch als vorteilhaft, wenn das Filtergehäuse neben einem Sektor zur Aufnahme der Lamellen einen Sektor zur Aufnahme von Einlegern umfasst. Der eine Sektor dient also zur Aufnahme der Boden- und Deckelplatte nebst den dazwischen angeordneten, vorzugsweise als Halbschalen ausgebildeten Lamellen in einem ersten Filtergehäuse oder Filterteilgehäuse. Daneben erstreckt sich ein Freiraum, in den Einleger oder Einlegerplatten eingesetzt werden, die ihrerseits käfigartig zur Aufnahme von Vlies dienen und ihrerseits eine Kulisse für die Farbnebelabscheidung bilden.

Dass mindestens eine Lamelle in der vorderen Reihe mit mindestens einer Durchtrittsöffnung versehen ist, sieht ein weiterer Vorschlag vor. Gedacht ist dabei an eine Vielzahl solcher Öffnungen.

Die Erfindung zeichnet sich insbesondere dadurch aus, dass ein Filter zur bevorzugten Abscheidung von Farbnebel mit einer hohen Filterleistung geschaffen ist. Zentral ist dabei eine Filterbaugruppe, bestehend aus einer Bodenplatte und einer Deckelplatte mit zahlreichen Aufnahmen für die in bevorzugter Weise als Halbschalen ausgebildeten Lamellen. Zwei Wandungen zwischen den beiden Baugruppen ermöglichen das Zusammenklappen der Baugruppe auf minimale Ausmaße. Zahlreiche Möglichkeiten für die Positionierung von Lamellen erweisen sich als vorteilhaft.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Figur 1: eine Deckelplatte,
- Figur 2: Deckel- und Bodenplatte mit drei Lamellen,
- Figur 3: Deckel- und Bodenplatte mit einer Lamelle,
- Figur 4: Deckel- und Bodenplatte mit zwei Lamellen,
- Figur 5: Deckel- und Bodenplatte mit zwei Lamellen und Vlies,
- Figur 6: eine ausgeklappte Halbschale,
- Figur 7: Deckel- und Bodenplatte ohne Lamellen,
- Figur 8: ein Filtergehäuse mit zwei Sektoren,
- Figur 9: zwei Lamellen mit Durchtrittsöffnungen,
- Figur 10: einen Sektor mit Lamellen,
- Figur 11: eine zweiteilige Abschlussplatte,
- Figur 12: eine Steckverbindung,
- Figur 13: eine Abschlussplatte mit Papiergelege,
- Figur 14: die Rückansicht eines Filtermoduls,
- Figur 15: eine Variante zu Figur 14 und
- Figur 16: die Kragen und Perforationen,

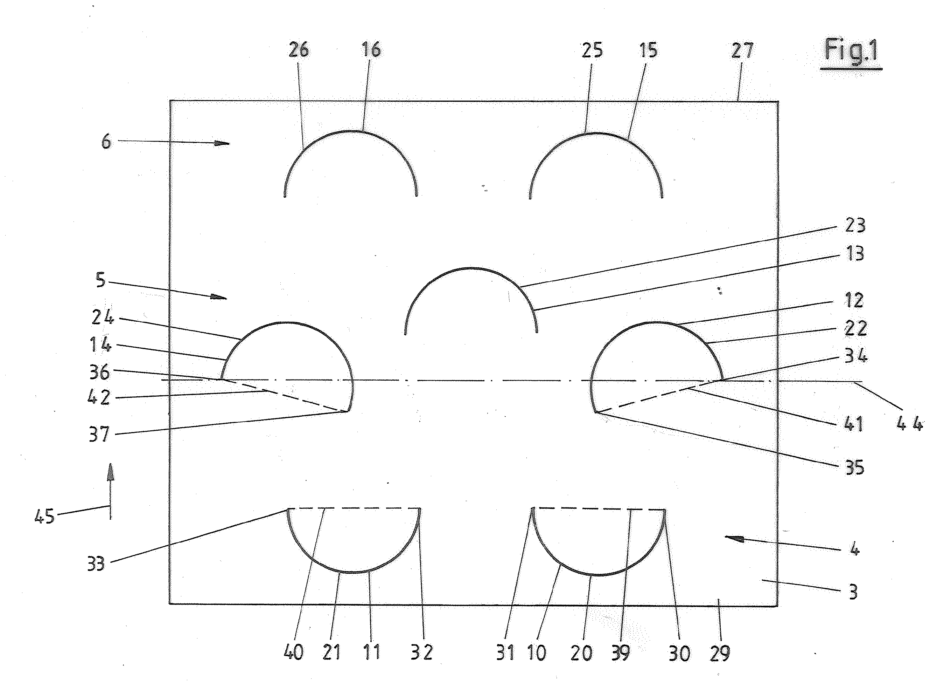

In Figur 1 ist eine Deckelplatte 3 dargestellt. Sie umfasst sieben Aufnahmen 10-16 für sieben Lamellen 20-26. Dabei verteilen sich die Lamellen 20, 21 auf die in Strömungsrichtung 45 vordere Reihe 4, die drei in der mittleren Reihe 5 ausmachenden Lamellen 22-24 und die die hintere Reihe 6 darstellenden Lamellen 25 und 26. Die gestrichelten Geraden 39, 40 sind erdachte Geraden zwischen den Endpunkten 30, 31 der Lamelle 20 bzw. der Endpunkte 32, 33 der Lamelle 21. Die beiden Geraden 39 und 40 sind hier nebeneinander angeordnet. Sie sind um 180° verdreht in Bezug auf die beiden Lamellen 25 und 26 der hinteren Reihe 6, während in der mittleren Reihe 5 die beiden äußeren Lamellen 22, 24 in einem Winkel zur Achse 44 positioniert sind, symbolisiert durch die Geraden 41, 42.

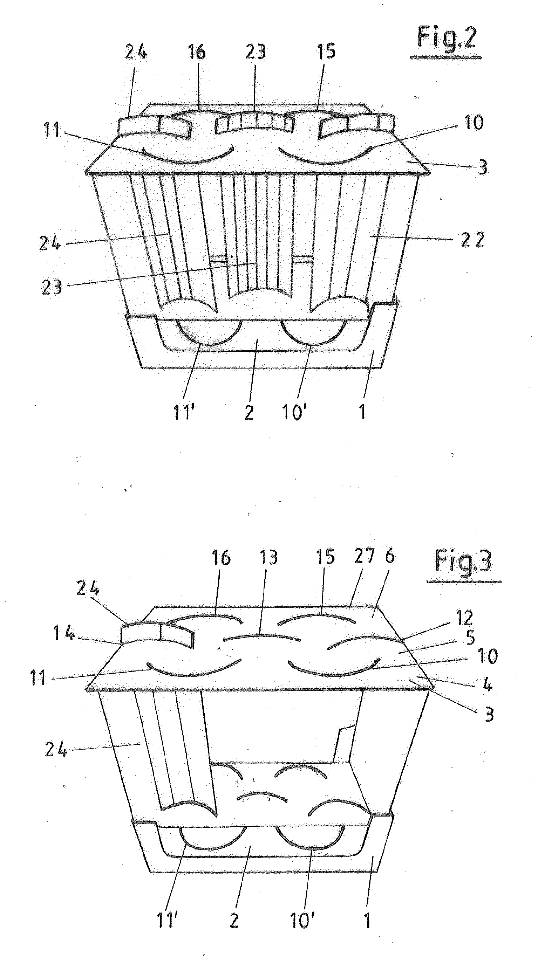

Figur 2 zeigt ein Filtergehäuse 1 mit Bodenplatte 2 und Deckelplatte 3 mit den dazwischen eingeklemmten Lamellen 22-24. Die Aufnahmen sind u.a. mit den Bezugszeichen 11, 11' und 10, 10' versehen.

Maßgeblicher Unterschied zu Figur 2 ist in Figur 3 die Tatsache, dass dort nur eine Lamelle 24 gezeigt ist. Gut zu erkennen ist hierbei bereits die Krümmung der Lamelle 24, vorgegeben durch die diversen Aufnahmen 11-16.

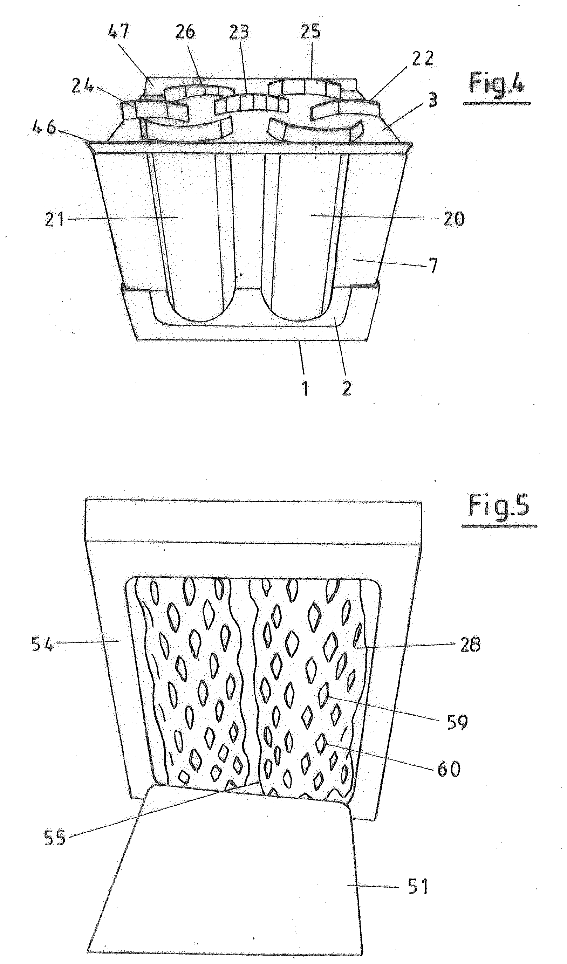

Dazu dann Figur 4 mit in diesem Fall zwei Lamellen 20, 21 positioniert zwischen Bodenplatte 2 und Deckelplatte 3. Mit dem Bezugszeichen 46 ist der umschlagbare Kragen bezeichnet. Die Bodenplatte 2 und die Deckelplatte 3 sind über Seitenwände verbunden. Diese Seitenwände dienen dazu, dass durch die feste Verbindung ein fest definierter Abstand von Deckel- und Bodenplatte 2, 3 entsteht. Die Seitenwände ermöglichen ein einfaches Einführen der Lamellen bzw. verhindern gleichzeitig deren Herausrutschen, da die Lamellen der Höhe der Seitenwände plus beidseitig umgeschlagener Kragen entsprechen. Durch das Umbiegen/Einknicken der beiden Kragen können die bis zu sieben Lamellen schneller und einfacher eingesteckt werden, bzw. durch die beiden Kragen können die Lamellen eine bereits angesprochene Fixierung realisieren.

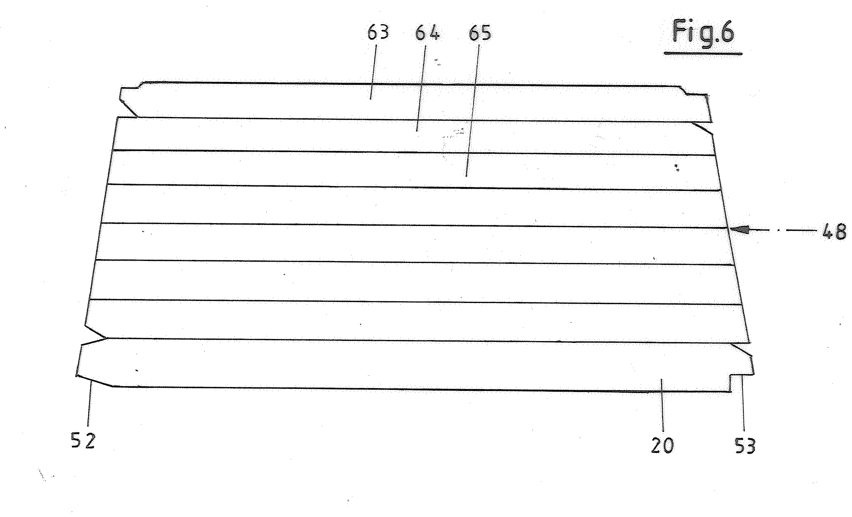

Abgewickelt veranschaulicht Figur 6 eine ansonsten als Halbschale ausgebildete Lamelle 20. Die Lamelle 20 umfasst Knickfalten oder auch Abschnitte 63-65 als Vorgabe für ein korrektes und leichtes Zusammensetzen von Lamelle und deren gehäuseseitiger Aufnahme.

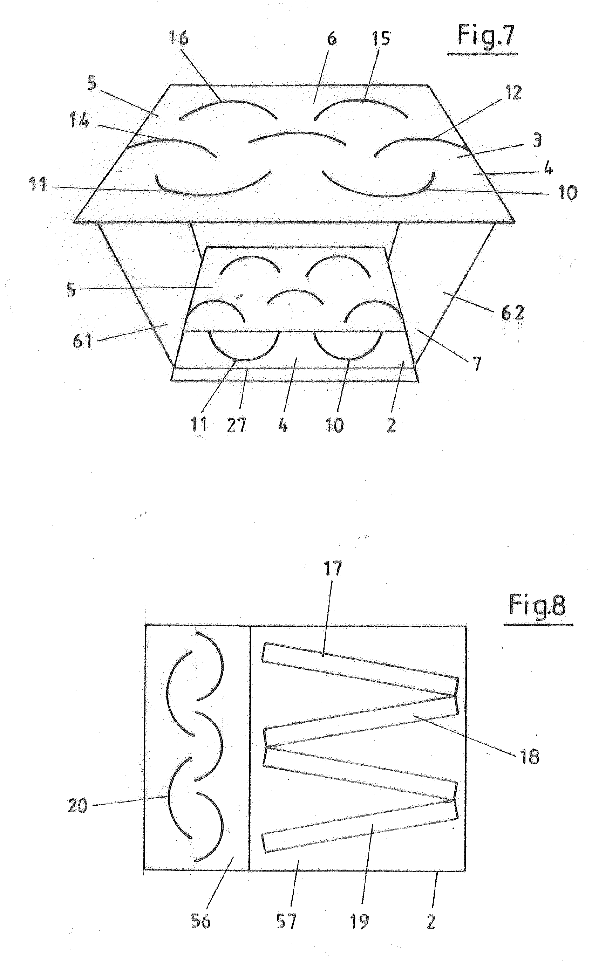

Figur 7 veranschaulicht eine weitere Komponente dieses kompakt bauenden Filters mit Bodenplatte 2 und Deckelplatte 3 und der Möglichkeit des Einklappens dieses Filtergehäuses 1 zu Transportzwecken, bestehend aus den beiden Platten 2 und 3 und den damit verbundenen Seitenplatten 61, 62. Mit 46, 47 sind der jeweilige Kragen bezeichnet, mit 72, 73, 74 die das Einschlagen des Kragens 46, 47 vereinfachenden Perforationen.

Dazu zeigt Figur 8 die Aufteilung des Filtergehäuses 1 in einer bevorzugten Ausführungsform der Erfindung mit getrennten Sektoren 56, 57. Sektor 56 dient zur Aufnahme der Halbschalen/Lamellen, von denen eine beispielhaft mit dem Bezugszeichen 20 versehen ist. Der in Figur 8 rechte Sektor 57 umfasst Einleger 17-19. Auf die Abbildung des Vlieses und der Abstandshalter zwischen den Einlegers 17-19 wurde hier verzichtet.

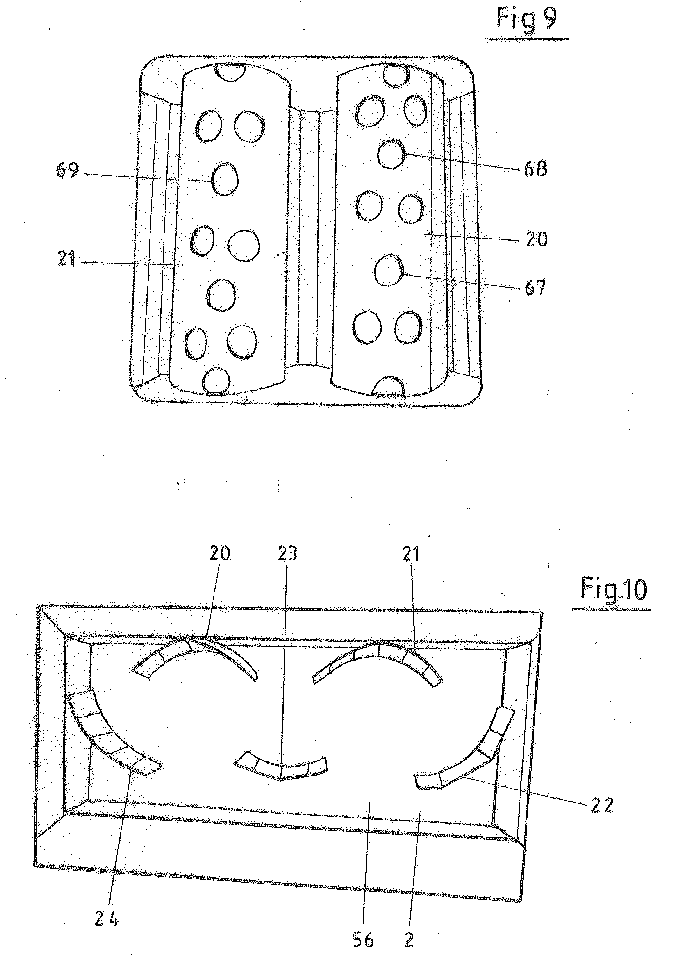

Figur 9 illustriert zwei Lamellen 20, 21 mit einer Vielzahl von Durchtrittsöffnungen, von denen drei mit den Bezugszeichen 67-69 versehen sind.

Figur 10 zeigt den Blick auf die Bodenplatte 2 des Sektors 56 mit Lamellen 20-24.

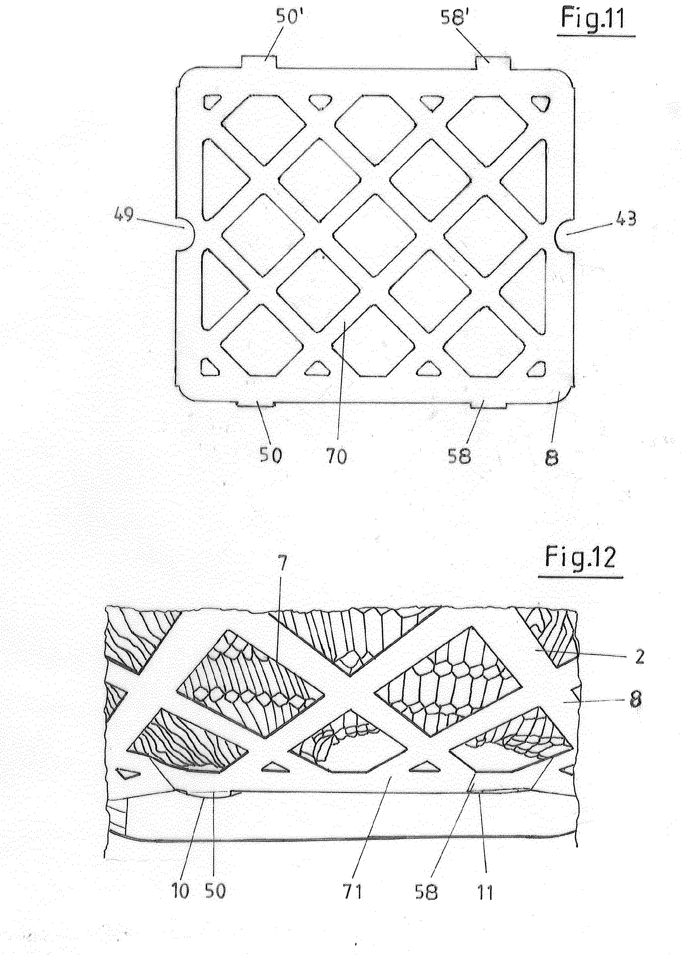

Figur 11 veranschaulicht eine Abschlussplatte 8. An ihrer Unterseite bzw. Oberseite weist die Platte 8 Zapfen 50, 58 bzw. 50', 58' auf, die zur Befestigung bzw. Verankerung der Abschlussplatte 8 dienen. Dazu korrespondieren Zapfen 50, 58 und die plattenseitigen Aufnahmen. Bei einer wie hier einteiligen Platte 8 mit den Fingereinkerbungen 43, 49 sind die oberen Zapfen Bestandteil der Platte 8 und länger ausgebildet als die unteren, damit die Platte 8 nicht durch steigenden Druck bei zunehmender Verschmutzung herausgedrückt werden kann.

Veranschaulicht ist das in Figur 12 im Einbauzustand. Dabei handelt es sich um einen Entspannungsraum/Wechselzelle 7 und eine Ansicht von hinten mit eingebauter Abschlussplatte 8, gebildet durch zwei Teilplatten, eingesteckt und damit über die Zapfen 50, 58 in den Aufnahmen 10, 11 in der Bodenplatte 2 fixiert.

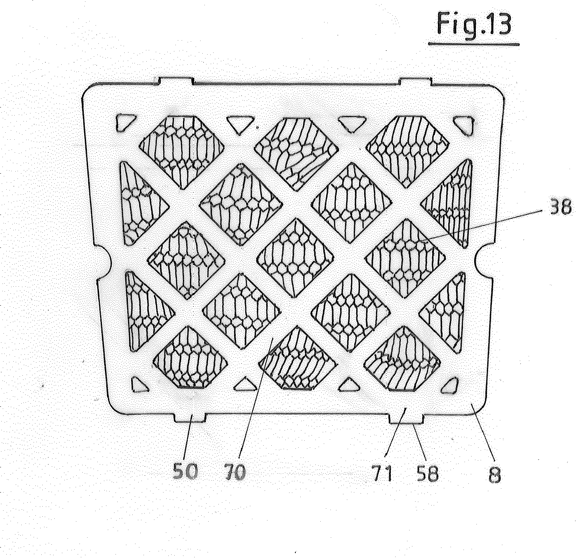

Eine Teilplatte 8 zeigt Figur 13 mit daran verbundenem Papiergelege 38, fixiert z.B. durch Tackern des Papiergeleges 38 an den Stegen 70. Auch hier gut zu erkennen die Zapfen 50, 58 an dem unteren Steg 71 der Platte 8.

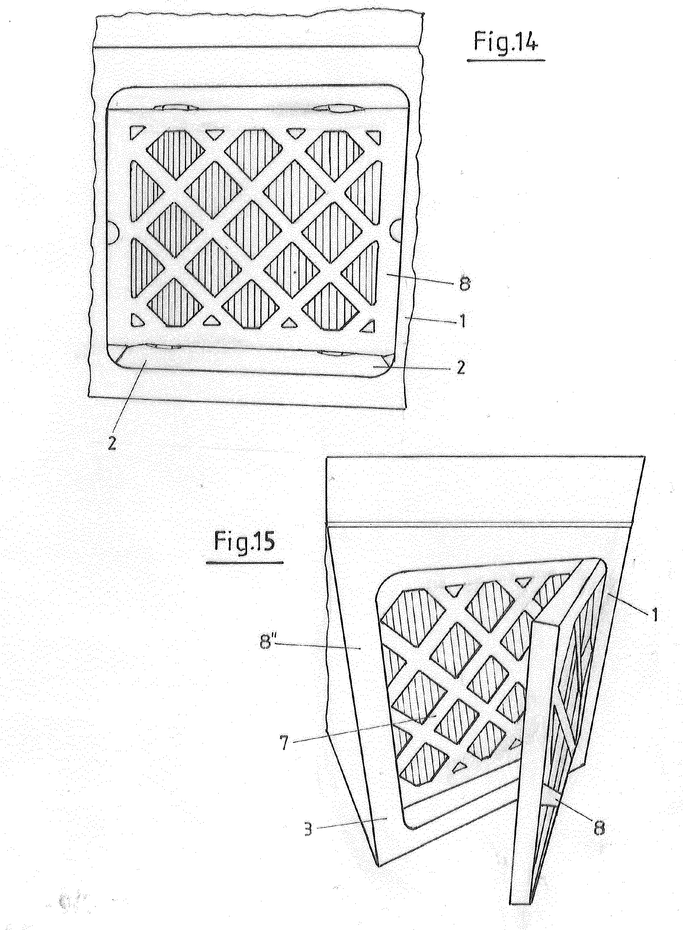

Ergänzend zeigen die Figuren 14 und 15 ein Filtergehäuse 1 mit Blick auf die Abschlussplatte 8 und den Entspannungsraum/Wechselzelle 7. Diese ist über die hier verdeckten, weil in der Aufnahme befindlichen Zapfen nicht erkennbar in der Bodenplatte 2 verankert. Dasselbe Szenario ist an der Oberseite zu erkennen. Die Figuren 14 und 15 zeigen die erfindungsgemäße Wechselzelle in Rückansicht in Figur 14 und in Seitenansicht in Figur 15.

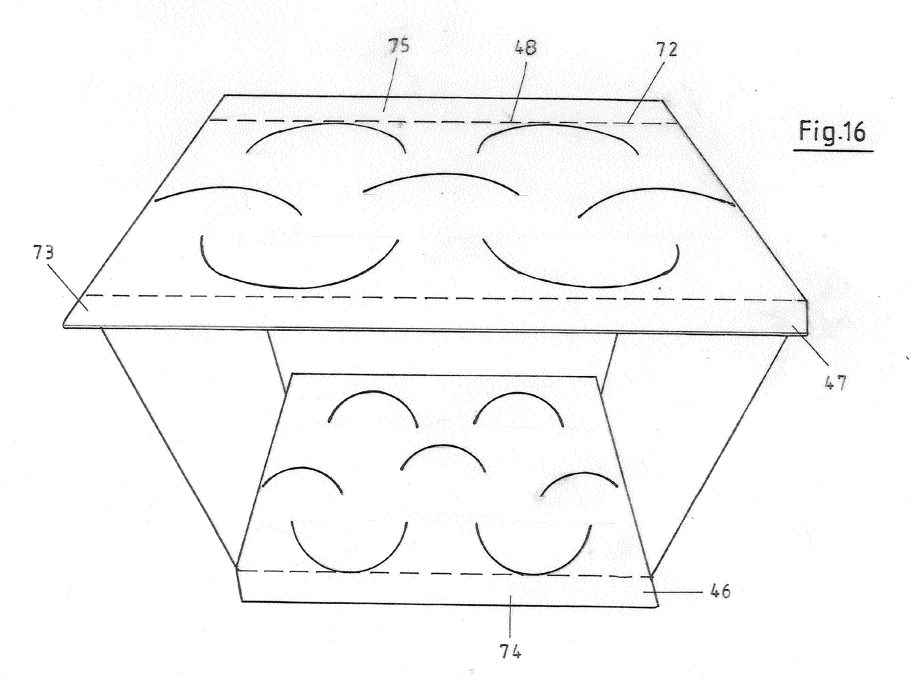

Der Schwerpunkt von Figur 16 sind die Kragen und Perforationen. Die Deckelplatte 3 weist einen solchen Kragen 47 an ihrem vorderen Ende auf, die Bodenplatte 3 umfasst einen Kragen 46, mit dieser verbunden über die Perforation 74. Am hinteren Ende sind der Kragen 75 und die Perforation 72 zu erkennen.

## Patentansprüche

1. Filtermodul zum Abscheiden insbesondere von klebrigem und trockenem Lack- und/oder Kleberoverspray, Schleifstäuben etc., mit einem Filtergehäuse (1), in dem Lamellen (20-26) zwischen einer Bodenplatte (2) und einer Deckelplatte (3) unter Vorgabe einer Filterkulisse geführt sind und wobei die Filterkulisse Aufnahmen (10-16) für eine Mehrzahl von in Reihen (4, 5, 6) angeordneten Lamellen (20-26) aufweist,
**dadurch gekennzeichnet,**
**dass** die Deckelplatte (3) und/oder die Bodenplatte (2) mit einem verschwenkbaren, zum Festklemmen von Deckelplatte (3) und/oder Bodenplatte (2) in dem Filtergehäuse (1) dienenden Kragen (46, 47) ausgerüstet sind.

2. Filtermodul nach Anspruch 1,
**dadurch gekennzeichnet,**
**dass** die vordere Reihe (4) und/oder die hintere Reihe (6) jeweils Aufnahmen (10, 11, 15, 16) für mindestens zwei Lamellen (20, 21, 25, 26) umfassen.

3. Filtermodul nach Anspruch 1,
**dadurch gekennzeichnet,**
**dass** die die Endpunkte (30-33) der Aufnahmen (10, 11) für die Lamellen (20, 21) in der vorderen Reihe (4) und/oder hinteren Reihe (6) gedanklich verbindenden Geraden (39, 40) in einer Flucht angeordnet sind.

4. Filtermodul nach Anspruch 1,
**dadurch gekennzeichnet,**
**dass** die die Endpunkte (34-37) der Aufnahmen (12, 13, 14) für die Lamellen (22, 23, 24) in der mittleren Reihe (5) gedanklich verbindenden Geraden (41, 42) in einem Winkel von 5° bis 15°, vorzugsweise 10° zur Längsachse (44) des Filtergehäuses (1) angeordnet sind.

5. Filtermodul nach Anspruch 1,
**dadurch gekennzeichnet,**
**dass** die Lamellen (20-21) in der vorderen Reihe (4) nach außen gewölbt angeordnet sind und dass die Lamellen (23, 25, 26) in der mittleren Reihe (5) und/oder der hinteren Reihe (6) nach innen gewölbt angeordnet sind.

6. Filtermodul nach Anspruch 1,
**dadurch gekennzeichnet,**
**dass** die Aufnahmen (15, 16) für die Lamellen (25, 26) in der hinteren Reihe (6) gegenüber den Aufnahmen (10, 11) für die Lamellen (20, 21) in der vorderen Reihe (4) um ca. 180° versetzt angeordnet sind.

7. Filtermodul nach Anspruch 1,
**dadurch gekennzeichnet,**
**dass** die Aufnahmen (15, 16) der hinteren Reihe (6) einen die Ausbildung eines Entspannungsraumes (7) begünstigenden Abstand von mindestens 2-4 cm, vorzugsweise von 3 cm zum hinteren Rand (27) von Bodenplatte (2) oder Deckelplatte (3) aufweisen, wobei der Entspannungsraum (7) zwischen der Rückseite des Filtergehäuses (1) und dem direkt dahinter auf Stoß angeordneten zweiten Farbnebelabscheidemoduls vorgesehen ist.

8. Filtermodul nach Anspruch 1,
**dadurch gekennzeichnet,**
**dass** als hinterer Abschluss des Entspannungsraumes (7) eine eine Filterfunktion ausübende Abschlussplatte (8) vorgesehen ist.

9. Filtermodul nach Anspruch 1,
**dadurch gekennzeichnet,**
**dass** die Abschlussplatte (8) mindestens einen zur Verankerung der Abschlusspatte (8) dienenden und korrespondierend zu den Aufnahmen (15, 16) in der Bodenplatte (2) bzw. Deckelplatte (3) dienenden Zapfen (50, 58) aufweist.

10. Filtermodul nach Anspruch 1,
**dadurch gekennzeichnet,**
**dass** der Abstand der äußeren Lamellen (22, 24) in der mittleren Reihe (5) zur Gehäusewand maximal der Lamellen- bzw. der halben Schalendicke entspricht und/oder dass die Länge der Lamellen (20-26) zumindest weitgehend dem lichten Abstand zwischen Deckelplatte (3) und Bodenplatte (2) entspricht.

11. Filtermodul nach Anspruch 1,
**dadurch gekennzeichnet,**
**dass** die Lamellen (20-26) mehrere in Richtung ihrer Längsachse (48) verlaufende Abschnitte (63-65) aufweisen.

12. Filtermodul nach Anspruch 1,
**dadurch gekennzeichnet,**
**dass** die Lamellen (20-26) an ihren Flanken (52, 53) ein das Verkeilen begünstigendes Profil aufweisen.

13. Filtermodul nach Anspruch 1,
**dadurch gekennzeichnet,**
**dass** die Lamellen (20-26) zumindest abschnittsweise von einem aus mindestens einer Schicht gebildeten Vlies (28) umgeben sind.

14. Filtermodul nach Anspruch 1,
**dadurch gekennzeichnet,**
**dass** die Frontplatten (51) des Filtergehäuses (1) unter Belassen eines nach innen gerichteten Rahmens (54) demontierbar ausgebildet sind, wozu zwischen der Frontplatte (51) des Filtergehäuses (1) und dem Rahmen (54) eine Perforation (55) vorgesehen ist.

15. Filtermodul nach Anspruch 1,
**dadurch gekennzeichnet,**
**dass** mindestens eine Lamelle (20) in der vorderen Reihe (4) mit mindestens einer Durchtrittsöffnung (67-69) versehen ist.
